(19) Europäisches Patentamt
European Patent Office
Office européen des brevets

(11) **EP 4 040 837 A1**

(12) **EUROPEAN PATENT APPLICATION**
published in accordance with Art. 153(4) EPC

(43) Date of publication:
**10.08.2022 Bulletin 2022/32**

(21) Application number: **19947559.1**

(22) Date of filing: **03.10.2019**

(51) International Patent Classification (IPC):
**H04W 24/10** (2009.01)

(52) Cooperative Patent Classification (CPC):
**H04W 24/10**

(86) International application number:
**PCT/JP2019/039222**

(87) International publication number:
**WO 2021/064974 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **YOKOKAWA, Tomoki**
**Tokyo 100-6150 (JP)**
• **KAKISHIMA, Yuichi**
**Tokyo 100-6150 (JP)**
• **TAKADA, Takuma**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57) A terminal includes a control unit that calculates a delay time for an L3 measurement based a periodicity of a reference signal and at least one of a number of samples used for the L3 measurement, a coefficient indicating an overlap between a timing of the L3 measurement and a measurement other than the L3 measurement, or a coefficient indicating switching of a reception beam.

FIG.9

EP 4 040 837 A1

**Description**

TECHNICAL FIELD

The present invention relates to a terminal and a communication method in a radio communication system.

BACKGROUND ART

An L3 measurement refers to three measurements, which are a measurement of Reference Signal Received Power (RSRP), a measurement of Reference Signal Received Quality (RSRQ), and a measurement of Signal-to-Interference plus Noise Power Ratio (SINR). For the purpose of adding a component carrier (CC), during handover or carrier aggregation (CA) while maintaining communication quality, a terminal measures the reception quality of its own cell and other cells in advance (that is, performs the L3 measurement in advance), and reports the result to the base station side. The base station can select an optimal cell as a handover destination based on the reception quality reported from the terminal.

In L3 measurement in Release 15 NR, the measurement is performed using a Synchronization Signal Block (SSB) transmitted in a cell to be measured. For the measurement of the SSB, a measurement window that can be configured on a per carrier basis, which is called SS/PBCH Block Measurement Time Configuration (SMTC), is used. When measuring the reception quality of another cell/another CC, the terminal performs the measurement within a Measurement Gap. Here, the Measurement Gap is a measurement window for stopping transmission/reception of data of the own cell and measuring a cell/a CC with a different frequency.

Related Art Document

[Non-Patent Document]

Non-Patent Document 1: 3GPP TS 38.214 V15.6.0(2019-06)

SUMMARY OF THE INVENTION

[PROBLEM TO BE SOLVED BY THE INVENTION]

There is a need for a method of appropriately calculating a delay time for an L3 measurement.

[MEANS FOR SOLVING THE PROBLEM]

According to an aspect of the present invention, there is provided a terminal including a control unit that calculates a delay time for an L3 measurement based a periodicity of a reference signal and at least one of a number of samples used for the L3 measurement, a coefficient indicating an overlap between a timing of the L3 measurement and a measurement other than the L3 measurement, or a coefficient indicating switching of a reception beam.

[ADVANTAGE OF THE INVENTION]

According to an embodiment, a method of appropriately calculating a delay time for an L3 measurement is provided.

BRIEF DESCRIPTION OF DRAWINGS

FIG. 1 is a configuration diagram of a communication system according to an embodiment.
FIG. 2 is a diagram illustrating an example of types of QCL.
FIG. 3 is a diagram illustrating an example of an NR beam management process.
FIG. 4 is a diagram illustrating an example of a source and a target of QCL.
FIG. 5 is a diagram illustrating an example of higher layer parameters related to a CSI-RS based L3 measurement.
FIG. 6 is a diagram illustrating an example of an operation rule for Rx beam sweeping in FR2.
FIG. 7 is a diagram illustrating an example of an operation rule from a viewpoint of timing synchronization in FR2.
FIG. 8 is a diagram illustrating an example of a functional configuration of a base station.

FIG. 9 is a diagram illustrating an example of a functional configuration of a terminal.

FIG. 10 is a diagram illustrating an example of the hardware configuration of the terminal and the base station.

[EMBODIMENTS OF THE INVENTION]

In the following, embodiments of the present invention are described with reference to the drawings. The embodiments described below are merely examples, and embodiments to which the present invention is applied are not limited to the following embodiments.

In the embodiments of the present invention described below, terms used in the existing LTE are used, such as Synchronization Signal (SS), Primary SS (PSS), Secondary SS (SSS), Physical Broadcast channel (PBCH), and Physical Random Access channel (PRACH). This is for convenience of description, and signals and functions similar to these may be referred to by other names. The above-described terms in NR correspond to NR-SS, NR-PSS, NR-SSS, NR-PBCH, NR-PRACH, and the like. However, even if a signal is used for NR, the signal is not always explicitly indicated as "NR-."

In embodiments of the present invention, a duplex method may be a Time Division Duplex (TDD) method, a Frequency Division Duplex (FDD) method, or any other method (e.g., Flexible Duplexing).

In the following description, a method of transmitting a signal using a transmit beam may be digital beamforming, in which a signal multiplied by a precoding vector (precoded with the precoding vector) is transmitted, or analog beamforming, in which beamforming is implemented using a variable phase shifter in an RF (Radio Frequency) circuit. Similarly, a method of receiving a signal using a receiving beam may be digital beamforming, in which a received signal is multiplied by a predetermined weight vector, or analog beamforming, in which beamforming is implemented using a variable phase shifter in an RF circuit. Hybrid beamforming combining digital beamforming and analog beamforming may be applied to transmission and/or reception. Transmitting a signal using a transmit beam may be transmitting the signal with a specific antenna port. Similarly, receiving a signal using a receiving beam may be receiving the signal with a specific antenna port. An antenna port refers to a logical antenna port or a physical antenna port defined by the 3GPP standard. The above-described precoding or beamforming may be referred to as a precoder, a spatial domain filter, or the like.

Note that a method of forming a transmit beam and receiving beam is not limited to the above-described methods. For example, in a base station 10 or terminal 20 having multiple antennas, a method of changing an angle of each antenna may be used, a method of using a precoding vector and a method of changing the angle of the antenna may be used, a method of switching different antenna panels may be used, a method of combining multiple antenna panels may be used, or other methods may be used. For example, in a high frequency band, a plurality of mutually different transmit beams may be used. The use of multiple transmit beams is called multi-beam operation, and the use of a single transmit beam is called single-beam operation.

In the embodiments of the present invention, "configuring" a radio parameter or the like may include pre-configuring a predetermined value, or configuring the radio parameter signalled from the base station 10 or the terminal 20.

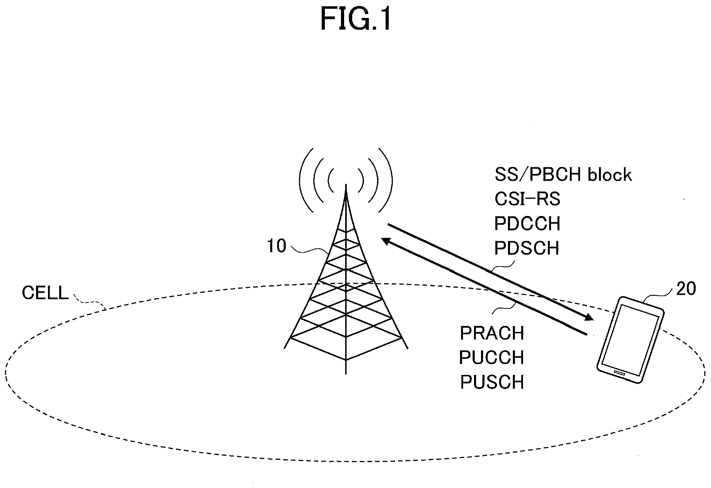

FIG. 1 is a diagram illustrating a radio communication system according to an embodiment of the present invention. The radio communication system in an embodiment of the present invention includes a base station 10 and terminal 20, as depicted in FIG. 1. In FIG. 1, one base station 10 and one unit of the terminal 20 are depicted. However, this is an example, and, for each of the devices, there may be a plurality of devices.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of sub-carriers or a number of resource blocks. The base station 10 transmits a synchronization signal and system information to the terminal 20. A synchronization signal is, for example, NR-PSS and NR-SSS. A part of system information is transmitted, for example, by NR-PBCH, which is also called broadcast information. A synchronization signal and broadcast information may be periodically transmitted as an SS block (SS/PBCH block) consisting of a predetermined number of OFDM symbols. For example, the base station 10 transmits a control signal or data in DL (Downlink) to the terminal 20 and receives a control signal or data in UL (Uplink) from the terminal 20. The base station 10 and the terminal 20 are capable of transmitting and receiving signals while performing beamforming. For example, as shown in FIG. 1, a reference signal transmitted from the base station 10 includes a Channel State Information Reference Signal (CSI-RS), and a channel transmitted from the base station 10 includes Physical Downlink Control Channel (PDCCH) and Physical Downlink Shared Channel (PDSCH).

The terminal 20 (user equipment 20) is a communication device provided with a radio communication function, such as a smartphone, a cellular phone, a tablet, a wearable terminal, and a communication module for Machine-to-Machine (M2M). The terminal 20 utilizes various communication services provided by a radio communication system by receiving a control signal or data in DL from the base station 10 and transmitting a control signal or data in UL to the base station 10. For example, as illustrated in FIG. 1, channels transmitted from the terminal 20 include Physical Uplink Control Channel (PUCCH) and Physical Uplink Shared Channel (PUSCH).

In the New Radio (NR), in order to secure coverage for communications using radio waves in a high frequency band, beamforming is applied to transmission of data in a Physical Downlink Shared Channel (PDSCH), transmission of a control signal in a Physical Downlink Control Channel (PDCCH), transmission of a synchronization signal and broadcast information in a Synchronization Signal/Physical Broadcast Channel (SS/PBCH) Block (SSB), and transmission of a reference signal (Channel State Information Signal (CSI-RS)/Demodulation Reference Signal (DMRS)).

For example, in Frequency Range 2 (FR2), i.e., in a frequency band of millimeter wave greater than or equal to 24 GHz, 64 beams can be used, and in Frequency Range 1 (FR1), i.e., in a sub-6GHz frequency band, 8 beams can be used.

For performing communication using a beam, beam management or beam control is important. For example, if there are two beams, the base station 10 may need to signal to the terminal 20 which beam is used to transmit the signal. A Transmission Configuration Indication (TCI) state is specified so as to transmit, to the terminal 20, a notification of the beam to be used, or to transmit, to the terminal 20, a notification of switching of a beam to be used.

Details to be signaled by a TCI state include Quasi-Co-Location (QCL) that indicates it is possible to assume that one reference signal (RS) and one channel are identical radio channels, or the one reference signal (RS) and the one channel have the same radio property (the same beam).

For example, the fact that a reference signal, such as a CSI-RS (or SS/PBCH) and a PDSCH that is a channel for transmitting data are QCL implies that the reference signal and the data have a relationship such that the reference signal and the data are transmitted with a same beam.

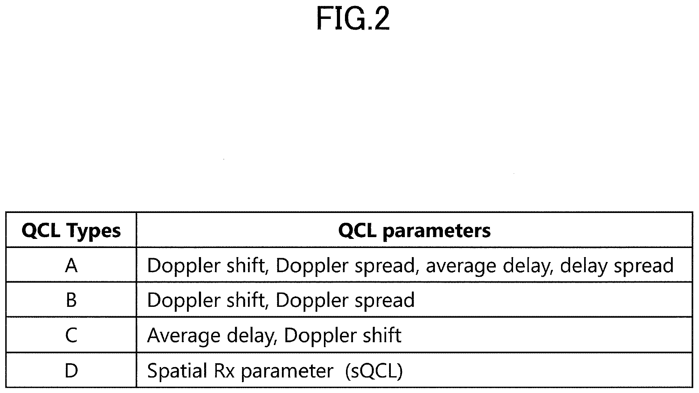

As shown in FIG. 2, four types of QCL are defined from A to D. In NR, the following four types of QCLs are supported, and a radio parameter included in each QCL-Type may be referred to as a QCL parameter. QCL-Type A: {Doppler shift, Doppler spread, average delay, delay spread}, QCL-Type B: {Doppler shift, Doppler spread), QCL-Type C: {Doppler shift, average delay}, and QCL-Type D: {Spatial Rx parameter}. QCL Type A - C are QCL information related to time/frequency synchronization processing. QCL Type D is QCL information related to beam control. For signaling beam information, QCL Type D is mainly used. QCL Type D implies that transmissions by the same beam. Other than that, for example, QCL Type A is used for signaling colocation, for example, whether the base stations 10 are located at a same location.

(Beam Management Function)

In NR, a beam management function is specified for selecting an optimum pair of a beam used by the base station 10 for transmission and a beam used by the terminal for reception.

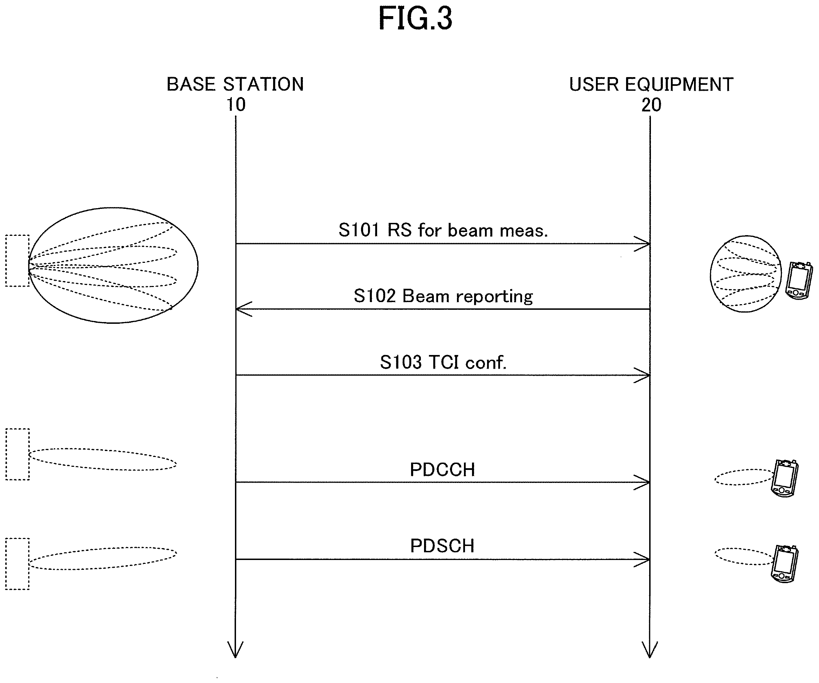

FIG. 3 is a diagram illustrating an example of NR beam management processing. In step S101 of FIG. 3, the base station 10 signals, to the terminal 20, a configuration of a reference signal and a configuration of reporting. In step S102, the terminal 20 measures the quality of a beam (RSRP: Reference Signal Received Power) using a reference signal transmitted in the signaled resource, and the terminal 20 transmits the measured quality to the base station 10.

The base station 10 calculates an optimum beam based on quality of each beam reported from the terminal 20, and the base station 10 signals, to the terminal 20, information indicating that data and/or a control signal is transmitted with the calculated beam, as a TCI state (step S103).

As a function that can be used in a beam management procedure, an RS resource configuration function, a Beam reporting function, and a Beam indication function are known, which are described below.

(RS resource configuration function)

The RS resource configuration function is a function for configuring a reference signal used for beam management (beam quality reporting: beam reporting/L1-RSRP reporting) by RRC signaling. Here, as a reference signal used for beam quality reporting, SSB or CSI-RS can be configured. Furthermore, supported periodicities of a CSI-RS include, aperiodic, semi-persistent, and periodic. Furthermore, as a function of optimizing the receiving beam (Rx beam) in the terminal 20, repetition in which the base station 10 repeatedly transmits a CSI-RS with the same beam, can be configured by RRC signaling (CSI-RS with repetition on or off).

(Beam reporting function)

A Beam reporting function is a function for reporting beam quality using the framework of the CSI-RS report. The terminal 20 reports beam quality to the base station 10. Supported reporting periodicities include, aperiodic, semi-persistent, and periodic.

(Beam indication function)

By the beam indication function, a Transmission Configuration Indication-state (TCI-state) can be configured, which is for signaling, from a network to the terminal 20, information indicating the beams to be used by the base station 10 for transmission of a reference signal, data, and a control signal.

(L3 measurement)

L3 measurement refers to three measurements, which are a measurement of Reference Signal Received Power (RSRP), a measurement of Reference Signal Received Quality (RSRQ), and a measurement of Signal-to-Interference plus Noise Power Ratio (SINR).

For the purpose of adding a component carrier (CC) during handover or carrier aggregation (CA) while maintaining communication quality, a terminal measures the reception quality of its own cell and other cells in advance (that is, it performs an L3 measurement in advance), and reports the result to the base station side. The base station can select an optimal cell as a handover destination based on the reception quality report from the terminal.

The method of the L3 measurement in LTE is different from the method of the L3 measurement in NR.

In the L3 measurement in LTE, the measurement is performed by using a Cell-specific Reference Signal (CRS) that is always on and that is transmitted by all base stations/cells.

In the L3 measurement according to Release 15 NR, the measurement is performed by using a Synchronization Signal Block (SSB) transmitted in the cell to be measured. For the measurement of the SSB, a measurement window that can be configured on a per carrier basis, which is called SS/PBCH Block Measurement Time Configuration (SMTC), is used.

When measuring the reception quality of another cell/another CC, the terminal performs the measurement within a Measurement Gap. Here, the Measurement Gap is a measurement window for stopping transmission/reception of data of the own cell and measuring a cell/a CC with a different frequency.

(Quasi Co-Location (QCL))

A QCL is specified to indicate a relationship between signals, in a case where radio parameters can be deemed to be equal between the two signals. For two signals that are QCL, there is a relationship, such as a source (parent) and a target (child).

As illustrated in FIG. 2, four types of QCL are supported in NR. A radio parameter included in each QCL-Type may be called a QCL parameter. Types A to C illustrated in FIG. 2 are QCL information related to time/frequency synchronization processing, and Type-D is QCL information related to a beam control.

In the existing NR specifications, it is specified to provide a notification of source signal information for a certain signal.

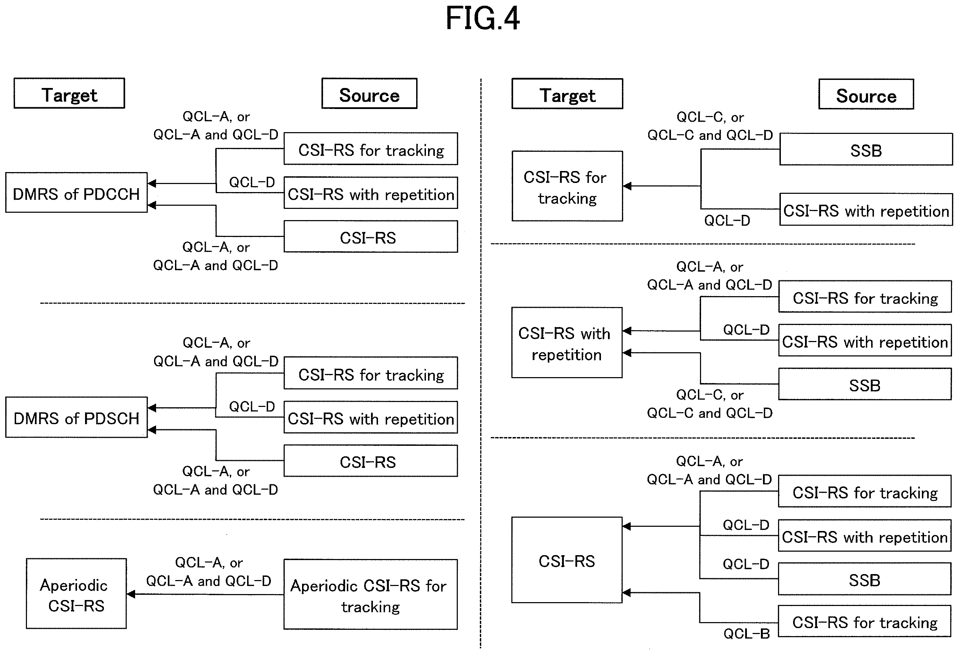

At the lower right of FIG. 4, for example, it is illustrated that the Channel state Information reference signal (CSI-RS) and the SSB can be associated, as QCL Type-D.

In the RAN4 standardization of 3GPP Release 16, development of a specification for an L3 measurement by using a CSI-RS has progressed.

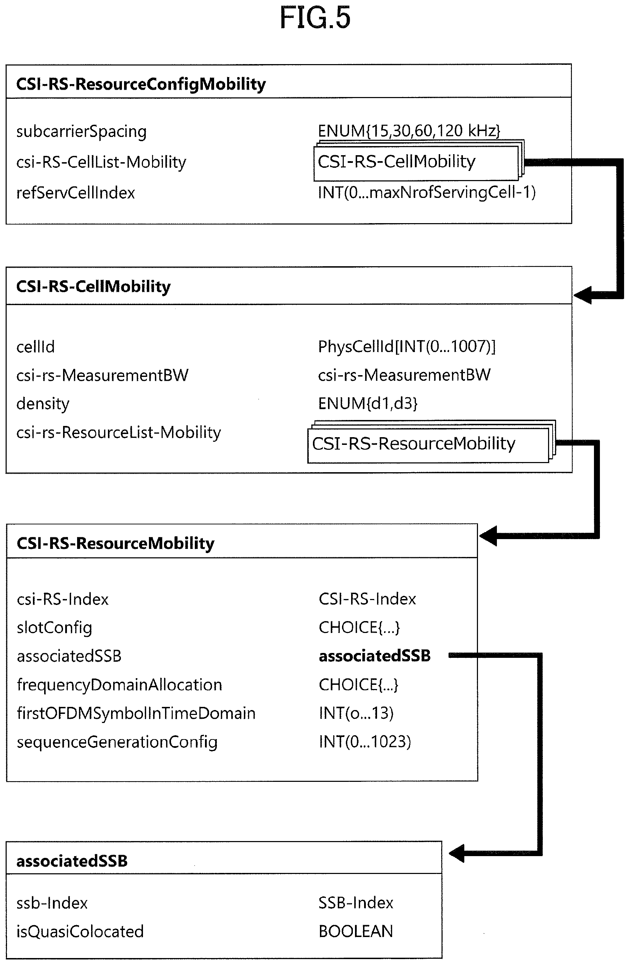

FIG. 5 is a diagram illustrating an example of higher layer parameters related to a CSI-RS based L3 measurement. As illustrated in FIG. 5, CSI-RS-CellMobility, which is a parameter in CSI-RS-ResourceConfigMobility, has a hierarchical structure, and ultimately, it is possible to determine whether the CSI-RS associated with the SSB indicated by the SSB-Index is QCL Type-D by the parameter called isQuasiColocated included in the associatedSSB.

In FR2, in some cases, a certain amount of time may be spent to detect a reception beam (Rx beam). The following expressions are examples of specific calculation formulas for calculating the certain amount of time. The time may be called a delay time.

$$\text{(FR1)} \quad M \times P \times (\text{SSB}/(\text{CSI-RS periodicity}))$$
(Expression 1)

$$\text{(FR2)} \quad M \times N \times P \times (\text{SSB}/(\text{CSI-RS periodicity}))$$
(Expression 2)

M: the number of samples used in a measurement of L1-RSRP reporting
P: Scaling factor taking into account an overlap with the SMTC or the Measurement Gap (MG).

N: Scaling factor taking into account reception beam switching of the terminal.

In the case of SSB, N is always equal to 8, but in the case of CSI-RS, there is a case where N = 1. The reason is that, because it is possible for the terminal to test an Rx beam by using an SSB or a CSI-RS with repetition on, it is not necessary to perform a measurement while changing the Rx beam again for the CSI-RS-based L1-RSRP measurement.

(Problem)

In the RAN4 standardization of 3GPP Release 16, the L3 measurement using the CSI-RS has been discussed. It is assumed that a requirement on a delay time necessary for a measurement or the like are to be discussed from now on.

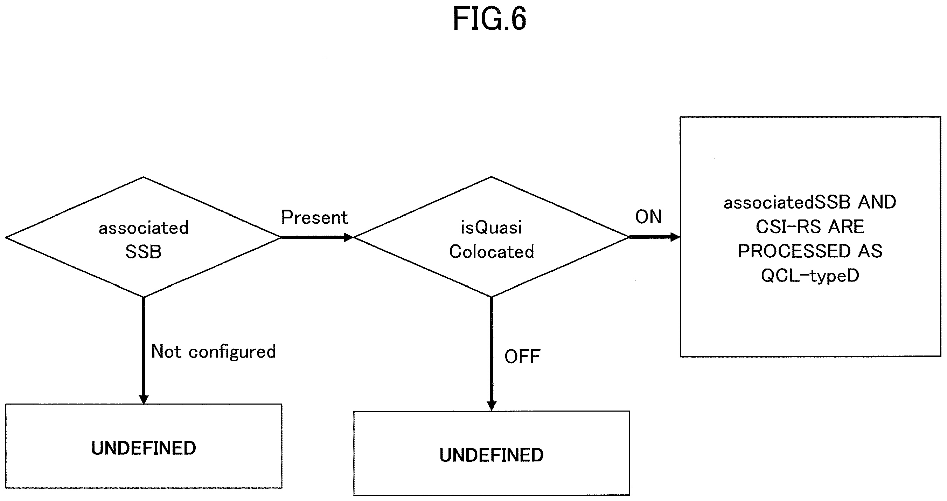

FIG. 6 is a diagram illustrating an example of an operation rule for Rx beam sweeping in FR2. As illustrated in FIG. 6, the operation rule for the Rx beam sweeping in FR2 has not been completely defined yet. For example, it is necessary to study an operation in a case where associated SSB is not configured, an operation in a case where the associated SSB is configured but isQuasiColocated is set to OFF, and the like.

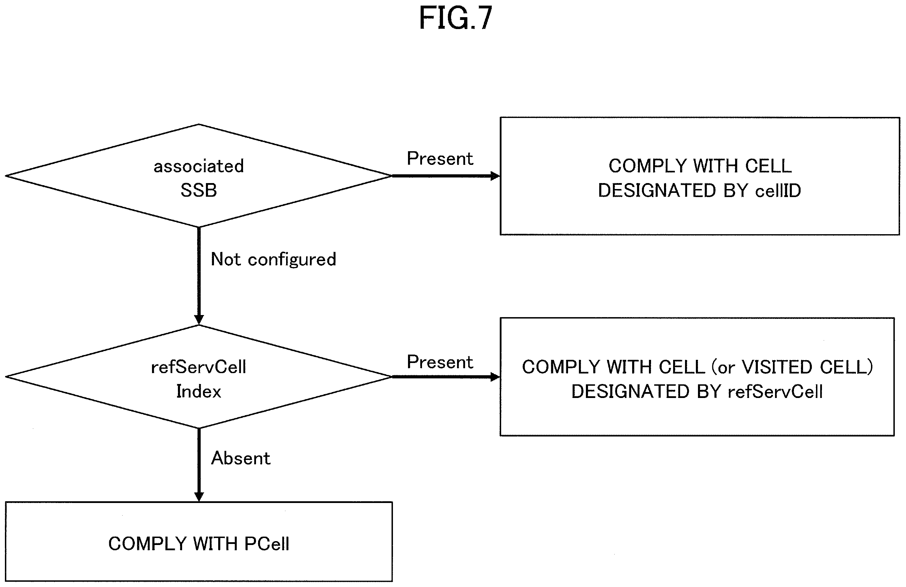

FIG. 7 is a diagram illustrating an example of an operation rule related to a viewpoint other than the Rx beam (the view point of the timing synchronization). As illustrated in FIG. 7, since the timing synchronization method differs according to the configuration, the method of specifying the operation may differ for each condition.

Furthermore, for example, it is likely that the above-described scaling factor N can be adjusted according to the density, the number of CSI-RS resources, or the like.

By defining a rule for the measurement by using the CSI-RS in a case where the associated SSB is present/not configured, in a case where isQuasiColocated is ON/OFF, or the like, the operation of the terminal and/or the measurement time in each condition can be optimized, and thereby the efficiency of the network control can be enhanced. Specifically, delay rules are proposed in the cases from two viewpoints, which are the viewpoint of the beam synchronization (QCL Type-D) and the view point of the timing synchronization.

(The view point of the beam synchronization (QCL Type-D))

For example, L3 CSI-RS measurement delay may be defined as a function of x, y, and z. For example, the L3 CSI-RS measurement delay may be defined by the following expression.

```
(Expression 3)
measurement  delay  =  x  ×  y  ×  z  ×  (CSI-RS
periodicity)
```

x: the number of samples used in the measurement of L3-RSRP reporting
y: the scaling factor taking into account the overlap between the CSI-RS measurement timing and another measurement (for example, a measurement based on an SSB)
z: the scaling factor taking into account the reception beam switching by the terminal

Regarding x in the above-described Expression 3, in a case where there is an overlap with the SMTC periodicity or the MG periodicity, for example, the value of x may be defined according to the number of SSBs read in the SMTC, for example.

In addition, regarding y in the above-described Expression 3, the value may be determined as follows.

For example, in a case where the CSI-RS measurement periodicity does not overlap the SMTC periodicity or the MG periodicity at all, y may be set 1 so as not to affect the measurement delay.

For example, in a case where the CSI-RS measurement periodicity partially overlaps the SMTC periodicity or the MG periodicity, y may be set to 1/(1 - (the CSI-RS periodicity)/(the SMTC periodicity (or the MG periodicity))).

For example, in a case where the CSI-RS measurement periodicity completely overlaps the SMTC periodicity or the MG periodicity, y may be set to be greater than or equal to 1, as in the case of the CSI-RS based L1 RSRP measurement.

Regarding z in the above-described Expression 3, the delay time may be relatively changed depending on the applicability of QCL-Type D.

For example, the delay time may be relatively increased when associatedSSB is not configured (when QCL-Type D is not applicable). For example, the value of z may be greater than or equal to 2. For example, the value of z may be 8, as in the case of the CSI-RS based L1 RSRP measurement.

For example, the delay time may be made relatively large in a case where isQuasiColocated is OFF (when QCL-Type D is not applicable). For example, the value of z may be greater than or equal to 2. For example, the value of z may be 8, as in the case of the CSI-RS based L1 RSRP measurement.

For example, in a case where QCL-Type D is applicable, that is, in a case where isQuasiColocated is ON, the delay time may be relatively decreased. For example, the value of z may be 1 as in the case of the CSI-RS based L1 RSRP measurement.

For example, the delay time may be changed depending on whether the designated associated SSB measurement has already been performed. For example, in a case where the associated SSB is a visited cell, the delay time may be reduced (for example, the value of z may be 1). For example, in a case where the associated SSB is not a visited cell, the delay time may be increased (the value of z may be 8).

For the above-described methods of setting x, y, and z, it may be changed as to whether the methods are applied depending on whether the frequency band is the FR1 or the FR2. For example, in FR1, the delay time may always be set as a constant, regardless of the above-described cases.

(The viewpoint of the timing synchronization)

For example, the L3 CSI-RS measurement delay may be defined as a function of x, y, and z. For example, the L3 CSI-RS measurement delay may be defined by the above-described Expression 3.

For example, in a case where there is an overlap with the SMTC periodicity or the MG periodicity in Expression 3, the value may be defined according to the number of the CSI-RS resources that cannot be measured in the overlapping periodicity. The value may be defined as x.

For example, regarding y in Expression 3, the value may be determined as follows.

For example, in a case where the CSI-RS measurement periodicity does not overlap the SMTC periodicity or the MG periodicity at all, the scaling factor y taking into account the overlap between the CSI-RS measurement timing and the other measurement may be set to 1 so as not to affect the measurement delay.

For example, in a case where the CSI-RS measurement periodicity partially overlaps the SMTC periodicity or the MG periodicity, the value of the scaling factor y taking into account the overlap between the CSI-RS measurement timing and the other measurement may be increased by reflecting that the CSI-RS measurement periodicity partially overlaps the SMTC periodicity or the MG periodicity. For example, y may be 1/(1 - (the CSI-RS periodicity)/(the SMTC periodicity (or the MG periodicity))).

For example, in a case where the CSI-RS measurement periodicity completely overlaps the SMTC periodicity or the MG periodicity, the value of the scaling factor y taking into account the overlap between the CSI-RS measurement timing and the other measurement may be increased by reflecting that the CSI-RS measurement periodicity completely overlaps the SMTC periodicity or the MG periodicity. Similar to the CSI-RS based L1 RSRP measurement, y may be set to 3.

In a case where a cell defined by cellID or refServCell is different from the visited cell, the time to read the SSB of the cell to be measured for synchronization may be considered as a measurement delay. For example,

```
(Expression 4)
measurement delay = (the time to process the SSB) +
(the time to process the CSI-RS) may be applied.
```

The above-described matter may be defined from the viewpoint of the frequency synchronization. In addition, the delay requirement may be determined integrally with the viewpoint of the beam synchronization.

(The viewpoint of the timing synchronization (QCL Types A to C))

For example, in the above-described Expression 3, the values of x, y, and z may be defined according to the configured QCL parameter. For example, x, y, and z may be defined according to one or more of Doppler shift, Doppler spread, average delay, and delay spread.

Changing the delay time depending on the QCL Type that is one of QCL Types A to C may be applied to a case other than the case of the L3 CSI-RS measurement. For example, it may be applied to the Radio Link Monitoring (RLM), the Beam Management (BM), or the like.

(Common to the viewpoint of the beam synchronization and the view point of the timing synchronization)

The delay time may be calculated based on the CSI-RS multiplexing density. For example, the delay time may be calculated by applying one or more of the number of CSI-RS ports, density (p), a bandwidth (the number of Resource Blocks (RBs)), the number of Resource Elements (REs), a TRS configuration, Repetition, power information such as EPRE, and Periodicity.

The availability of the measurement may be determined by the above-described parameters. For example, a condition on the CSI-RS applicable to the L3 measurement may be limited by the above-described parameters.

The threshold value may be determined by the above-described parameters. For example, the delay time may be reduced when the number of CSI-RS REs is large. For example, the delay time may be increased when the number of CSI-RS REs is small. For example, in the above-described Expression 3, x may be determined to be 3 when the number of REs of the CSI-RS is equal to that of the SSB, and x may be determined to be 2 when the number of REs of the CSI-RS is greater than or equal to that of the SSB.

According to the above-described embodiments, by defining the rules for the measurement by using the CSI-RS in the case where the associated SSB is Present/Not configured, in the case where isQuasiColocated is ON/OFF, or the like, the operation of the terminal and/or the measurement time for each case can be optimized and the efficiency of the network control can be enhanced.

(Device configuration)

Next, an example of the functional configuration of the base station 10 and the terminal 20 for performing the processes and operations described above is described. The base station 10 and the terminal 20 include functions for implementing the above-described embodiments. However, each of the base station 10 and the terminal 20 may include only a part of the functions in the embodiments.

<Base Station Apparatus 10>

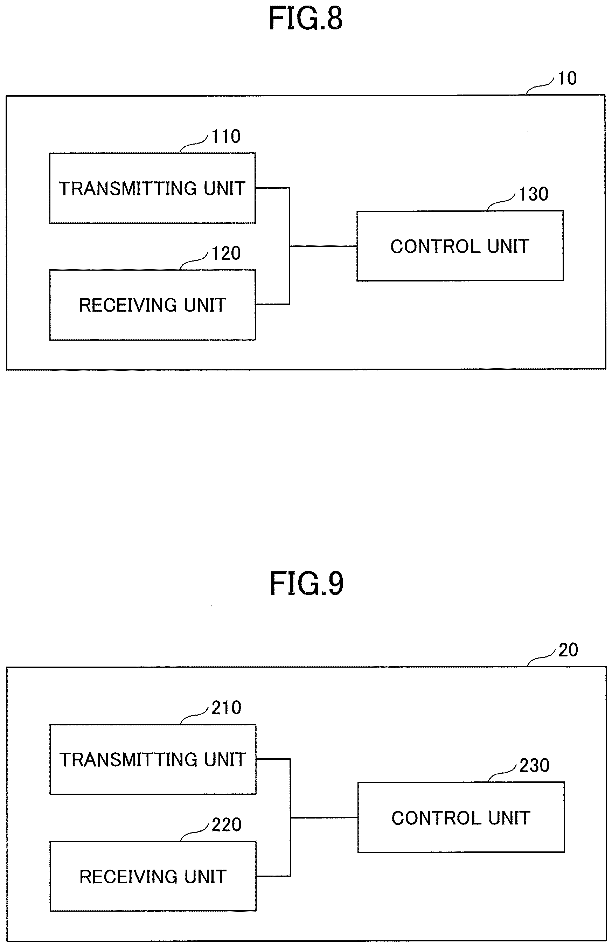

FIG. 8 is a diagram illustrating an example of the functional configuration of the base station 10. As illustrated in FIG. 8, the base station 10 includes a transmitting unit 110, a receiving unit 120, and a control unit 130. The functional configuration illustrated in FIG. 8 is merely one example. The functional division and names of functional units may be any division and names, provided that the operation according to the embodiments of the present invention can be performed.

The transmitting unit 110 includes a function for generating a transmit signal from transmit data, and the transmitting unit 110 transmits the transmit signal through radio. The receiving unit 120 receives various types of signals through radio, and the receiving unit 120 obtains a higher layer signal from the received physical layer signal. Furthermore, the receiving unit 120 includes a measurement unit that performs measurement of a received signal to obtain received power, and so forth.

The control unit 130 controls the base station 10. Note that the function of the control unit 130 related to transmission may be included in the transmitting unit 110, and the function of the control unit 130 related to reception may be included in the receiving unit 120.

In the base station 10, the control unit 130 may configure a parameter for L3 measurement using a CSI-RS, and the transmitting unit 110 may transmit the configured parameter to the terminal 20.

Furthermore, in the base station 10, the receiving unit 120 may receive UE capability including the L3 measurement delay time transmitted from the terminal 20. After providing an indication of L3 measurement, the beam for data transmission applied immediately before transmitting the indication signal of the L3 measurement may be continuously used in the time interval until the L3 measurement delay time elapses.

<Terminal 20>

FIG. 9 is a diagram illustrating an example of the functional configuration of the terminal 20. As illustrated in FIG. 9, the terminal 20 includes a transmitting unit 210, a receiving unit 220, and a control unit 230. The functional configuration illustrated in FIG. 8 is merely an example. The functional division and names of functional units may be any division and names, provided that the operation according to the embodiments can be performed.

The transmitting unit 210 includes a function for generating a signal to be transmitted to the base station 10 and transmitting the signal through radio. The receiving unit 220 includes a function for receiving various types of signals transmitted from the base station 10 and obtaining, for example, higher layer information from the received signals. The receiving unit 220 includes a measurement unit that measures a received signal to obtain a received power.

The control unit 230 controls the terminal 20. The function of the control unit 230 related to transmission may be included in the transmitting unit 210, and the function of the control unit 230 related to reception may be included in the receiving unit 220.

In the terminal 20, the receiving unit 220 measures quality of a beam (RSRP: Reference Signal Received Power) using a reference signal transmitted by a resource signaled by the base station 10, and the transmitting unit 210 transmits the measured quality to the base station 10.

For example, in the terminal 20, the control unit 230 may calculate the delay time for the L3 measurement based on any method described in the above-described embodiments and configure the UE capability including the delay time for the L3 measurement. In the terminal 20, the transmitting unit 210 may transmit information including the UE capability configured by the control unit 230 to the base station 10.

Furthermore, in the terminal 20, the receiving unit 220 may receive indication information for the L3 measurement. In the time interval from the reception of the indication information until the delay time of L3 measurement elapses, the control unit 230 may continuously use the reception beam applied immediately before the terminal 20 receives the indication information for the L3 measurement.

<Hardware configuration>

The block diagrams (FIG. 8 to FIG. 9) used for the description of the above embodiments show blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and so forth. For example, a functional block (component) that functions to transmit is called a transmitting unit or a transmitter. In either case, as described above, the implementation method is not particularly limited.

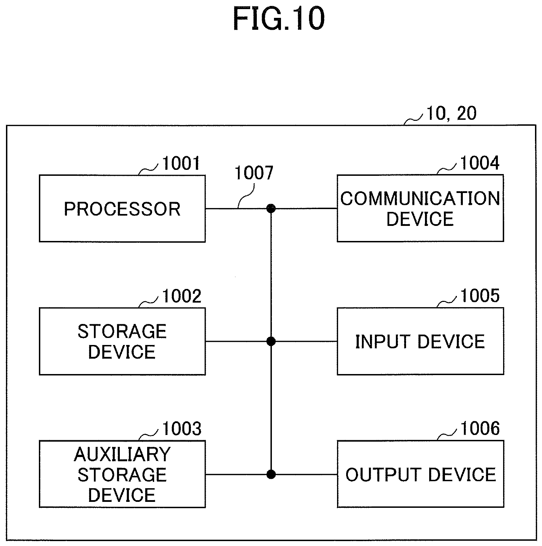

For example, the base station 10 and the terminal 20 according to an embodiment of the present invention may function as computers performing the process of the radio communication according to the embodiment of the present invention. FIG. 10 is a diagram illustrating an example of a hardware configuration of the base station 10 and the terminal 20 according to the embodiment. Each of the above-described base station 10 and terminal 20 may be physically configured as a computer device including a processor 1001, a storage device 1002, an auxiliary storage device 1003, a communication device 1004, an input device 1005, an output device 1006, a bus 1007, and so forth.

Note that, in the following description, the term "device" can be replaced with a circuit, a device, a unit, and so forth. The hardware configuration of the base station 10 and the terminal 20 may be configured to include one or more of the devices depicted in the figure, which are indicated by 1001 through 1006, or may be configured without some devices.

Each function of the base station 10 and the terminal 20 is implemented by loading predetermined software (program) on hardware, such as the processor 1001 and the storage device 1002, so that the processor 1001 performs computation and controls communication by the communication device 1004, and at least one of reading and writing of data in the storage device 1002 and the auxiliary storage device 1003.

The processor 1001, for example, operates an operating system to control the entire computer. The processor 1001 may be configured with a central processing unit (CPU: Central Processing Unit) including an interface with a peripheral device, a control device, a processing device, a register, and so forth.

Additionally, the processor 1001 reads a program (program code), a software module, data, or the like from at least one of the auxiliary storage device 1003 and the communication device 1004 to the storage device 1002, and executes various processes according to these. As the program, a program is used which causes a computer to execute at least a part of the operations described in the above-described embodiment. For example, the control unit 130 of the base station 10 may be implemented by a control program that is stored in the storage device 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The storage device 1002 is a computer readable storage medium, and, for example, the storage device 1002 may be formed of at least one of a Read Only Memory (ROM), an Erasable Programmable ROM (EPROM), an Electrically Erasable Programmable ROM (EEPROM), a Random Access Memory (RAM), and the like. The storage device 1002 may be referred to as a register, a cache, a main memory (main storage device), or the like. The storage device 1002 may store a program (program code), a software module, and so forth, which can be executed for implementing the radio communication method according to the embodiments of the present disclosure.

The auxiliary storage device 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk), a smart card, a flash memory (e.g., a card, a stick, a key drive), a floppy (registered trademark) disk, a magnetic strip, and so forth. The auxiliary storage device 1003 may be referred to as an auxiliary storage device. The above-described storage medium may be, for example, a database including at least one of the storage device 1002 and the auxiliary storage device 1003, a server, or any other suitable medium.

The communication device 1004 is hardware (transmitting and receiving device) for performing communication between computers through at least one of a wired network and a wireless network, and is also referred to, for example, as a network device, a network controller, a network card, a communication module, or the like. The communication device 1004 may be configured to include, for example, a high frequency switch, a duplexer, a filter, a frequency synthesizer, and the like, to implement at least one of frequency division duplex (FDD: Frequency Division Duplex) and time division duplex (TDD: Time Division Duplex).

The input device 1005 is an input device (e.g., a keyboard, mouse, microphone, switch, button, or sensor) that receives an external input. The output device 1006 is an output device (e.g., a display, speaker, or LED lamp) that implements an external output. The input device 1005 and the output device 1006 may have an integrated configuration (for example, a touch panel).

Each device, such as the processor 1001 and the storage device 1002, is also connected by the bus 1007 for communicating information. The bus 1007 may be formed of a single bus or may be formed of different buses between devices.

The base station 10 and the terminal 20 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of the functional blocks. For example, processor 1001 may be implemented using at least one of these hardware components.

(Conclusion of the embodiments)

In this specification, at least the user equipment and the communication method described below are disclosed.

A terminal including a control unit that calculates a delay time for an L3 measurement based a periodicity of a reference signal and at least one of a number of samples used for the L3 measurement, a coefficient indicating an overlap between a timing of the L3 measurement and a measurement other than the L3 measurement, or a coefficient indicating switching of a reception beam.

According to the configuration described above, for the delay time for the L3 measurement in FR2, it is possible to calculate the delay time reflecting the details, such as the configuration of the associated SSB, the configuration of isQuasiColocated, or the like.

A receiving unit that receives indication information indicating the L3 measurement may further be included, and, after receiving the indication information, the control unit may apply a previously applied reception beam to the receiving unit until the delay time elapses, the previously applied reception beam being the reception beam applied immediately before the indication information was received by the receiving unit.

According to the configuration described above, it is possible to stabilize the operation of the terminal from the start of the L3 measurement until the delay time elapses.

In a case where QCL-Type D is not applicable to a relationship between the reference signal and a synchronization signal, the control unit may set the coefficient indicating switching of the reception beam of the terminal to be greater than a coefficient indicating switching of the reception beam of the terminal in a case where the QCL-Type D is applicable to the relationship between the reference signal and the synchronization signal.

According to the configuration described above, it is possible to calculate an appropriate delay time depending on whether the reception beam of the terminal needs to be switched.

A receiving unit that receives indication information indicating the L3 measurement may be included, and, in a case where a cell indicated by the indication information differs from a visited cell, the control unit may include, in the delay time, a time for reading synchronization information of the cell designated by the indication information for synchronization.

According to the configuration described above, it is possible to appropriately reflect the time for synchronization in the delay time.

A communication method executed by a terminal, the method including calculating a delay time for an L3 measurement based a periodicity of a reference signal and at least one of a number of samples used for the L3 measurement, a coefficient indicating an overlap between a timing of the L3 measurement and a measurement other than the L3 measurement, or a coefficient indicating switching of a reception beam.

According to the configuration described above, for the delay time for the L3 measurement in FR2, it is possible to calculate the delay time reflecting the details, such as the configuration of the associated SSB, the configuration of isQuasiColocated, or the like.

(Supplemental Embodiments)

While the embodiments of the present invention are described above, the disclosed invention is not limited to the described embodiments, and those skilled in the art will appreciate various alterations, modifications, alternatives, and substitutions. Descriptions are provided using specific numerical examples to facilitate understanding of the invention, but, unless as otherwise specified, these values are merely examples and any suitable value may be used. Classification of the items in the above descriptions is not essential to the present invention, and the items described in two or more items may be used in combination as needed, or the items described in one item may be applied (unless inconsistent) to the items described in another item. The boundaries of functional units or processing units in the functional block diagram do not necessarily correspond to the boundaries of physical components. An operation by a plurality of functional units may be physically performed by one component or an operation by one functional unit may be physically executed by a plurality of components. For the processing procedures described in the embodiment, the order of processing may be changed as long as there is no contradiction. For the convenience of the description of the process, the base station 10 and the terminal 20 are described using functional block diagrams, but such devices may be implemented in hardware, software, or a combination thereof. Software operated by a processor included in the base station 10 in accordance with embodiments of the present invention and software operated by a processor included in the terminal 20 in accordance with embodiments of the present invention may be stored in a random access memory (RAM), a flash memory (RAM), a read-only memory (ROM), an EPROM, an EEPROM, a register, a hard disk (HDD), a removable disk, a CD-ROM, a database, a server, or any other suitable storage medium, respectively.

Notification of information is not limited to the aspects/embodiments described in the disclosure, and notification of information may be made by another method. For example, notification of information may be implemented by physical layer signaling (e.g., DCI (Downlink Control Information), UCI (Uplink Control Information), higher layer signaling (e.g., RRC (Radio Resource Control) signaling, MAC (Medium Access Control) signaling, broadcast information (MIB (Master Information Block), SIB (System Information Block))), or other signals or combinations thereof. RRC signaling may be referred to as an RRC message, for example, which may be an RRC connection setup message, an RRC connection reconfiguration message, or the like.

The aspects/embodiments described in this disclosure may be applied to a system using at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), any other appropriate system, and a next generation system extended based on theses. Additionally, a plurality of systems may be combined (e.g., a combination of at least one of LTE and LTE-A and 5G) to be applied.

The processing procedures, sequences, flow charts, or the like of each aspect/embodiment described in this disclosure may be reordered, provided that there is no contradiction. For example, the methods described in this disclosure present elements of various steps in an exemplary sequence and are not limited to the particular sequence presented.

The particular operation described in this disclosure to be performed by the base station 10 may be performed by an upper node in some cases. It is understood that in a network formed of one or more network nodes having the base station 10, various operations performed for communicating with the terminal may be performed by at least one of the base station 10 and a network node other than the base station 10 (e.g., MME or S-GW can be considered, however, the network node is not limited to these). The case is exemplified above in which there is one network node other than the base station 10. However, the network node other than the base station 10 may be a combination of multiple other network nodes (e.g., MME and S-GW).

Input and output information may be stored in a specific location (e.g., memory) or managed using management tables. Input and output information may be overwritten, updated, or added. Output information may be deleted. The input information may be transmitted to another device.

The determination may be made by a value (0 or 1) represented by 1 bit, by a true or false value (Boolean: true or false), or by comparison of numerical values (e.g., a comparison with a predefined value).

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

Software should be broadly interpreted to mean, regardless of whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, and so forth.

Software, instructions, information, or the like may also be transmitted and received via a transmission medium. For example, when software is transmitted from a website, server, or other remote source using at least one of wireline technology (such as coaxial cable, fiber optic cable, twisted pair, digital subscriber line) and wireless technology (e.g., infrared or microwave), at least one of these wireline technology and wireless technology is included within the definition of a transmission medium.

The information, signals, or the like described in this disclosure may be represented using any of a variety of different techniques. For example, data, instructions, commands, information, signals, bits, symbols, chips, or the like, which may be referred to throughout the above description, may be represented by voltages, currents, electromagnetic waves, magnetic fields or magnetic particles, optical fields or photons, or any combination thereof.

The terms described in this disclosure and those necessary for understanding this disclosure may be replaced by terms having the same or similar meanings. For example, at least one of the channels and the symbols may be a signal (signaling). The signal may also be a message. The component carrier may also be referred to as a carrier frequency, cell, frequency carrier, and so forth.

As used in this disclosure, the terms "system" and "network" are used interchangeably. The information, parameters, or the like described in the present disclosure may also be expressed using absolute values, relative values from predetermined values, or they may be expressed using corresponding separate information. For example, radio resources may be those indicated by an index.

The name used for the parameters described above are not restrictive in any respect. In addition, the mathematical equations using these parameters may differ from those explicitly disclosed in this disclosure. Since the various channels (e.g., PUCCH and PDCCH) and information elements can be identified by any suitable name, the various names assigned to these various channels and information elements are not in any way limiting.

In this disclosure, the terms "Base Station," "Radio Base Station," "Fixed Station," "NodeB," "eNodeB(eNB)," "gNodeB (gNB)," "Access Point," "Transmission Point," "Reception Point," "Transmission/Reception Point," "Cell," "Sector," "Cell Group," "Carrier," "Component Carrier," and the like may be used interchangeably. The base stations may be referred to as macro-cell, small-cell, femto-cell, picocell, or the like.

The base station can accommodate one or more (e.g., three) cells. Where the base station accommodates a plurality of cells, the entire coverage area of the base station can be divided into a plurality of smaller areas, each smaller area can also provide communication services by means of a base station subsystem (e.g., an indoor small base station (RRH) or a remote Radio Head). The term "cell" or "sector" refers to a portion or all of the coverage area of at least one of the base station and base station subsystem that provides communication services at the coverage.

In this disclosure, terms such as "mobile station (MS: Mobile Station)," "user terminal," "user equipment (UE: User Equipment)," and "terminal" may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of a base station and a mobile station may be referred to as a transmitter, receiver, communication device, or the like. At least one of a base station and a mobile station may be a device installed in a mobile body, a mobile body itself, or the like. The mobile body may be a vehicle (e.g., a car or an airplane), an unmanned mobile (e.g., a drone or an automated vehicle), or a robot (manned or unmanned). At least one of a base station and a mobile station includes a device that does not necessarily move during communication operations. For example, at least one of a base station and a mobile station may be an Internet of Things (IoT) device such as a sensor.

In addition, the base station in the present disclosure may be replaced with the user terminal. For example, various aspects/embodiments of the present disclosure may be applied to a configuration in which communication between the base stations and the user terminal is replaced with communication between multiple user terminals (e.g., may be referred to as Device-to-Device (D2D) or Vehicle-to-Everything (V2X)). In this case, a configuration may be such that the above-described function of the terminal 20 is included in the user terminal 20. The terms "up" and "down" may also be replaced with the terms corresponding to terminal-toterminal communication (e.g., "side"). For example, an uplink channel, a downlink channel, or the like may be replaced with a sidelink channel. Similarly, the user terminal according to the present disclosure may be replaced with a base station. In this case, a configuration may be such that, the function included in the above-described user terminal 20 may be included in the terminal 20.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be replaced with "access." As used in the present disclosure, the two elements may be considered as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "based on only" unless otherwise specified. In other words, the expression "based on" means both "based on only" and "at least based on."

As long as "include," "including," and variations thereof are used in this disclosure, the terms are intended to be inclusive in a manner similar to the term "comprising." Furthermore, the term "or" used in the disclosure is intended not to be an exclusive OR.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated" or "coupled," may also be interpreted similarly.

While the present invention is described in detail above, those skilled in the art will appreciate that the present invention is not limited to the embodiments described in the present specification. The present invention may be implemented as modifications and variations without departing from the gist and scope of the present invention as defined by claims. Accordingly, the description of the present specification is for illustrative purposes only and is not intended to have any restrictive meaning with respect to the present invention.

LIST OF REFERENCE SYMBOLS

| | |
|---|---|
| 10 | base station |
| 110 | transmitting unit |
| 120 | receiving unit |
| 130 | control unit |
| 20 | terminal |
| 210 | transmitting unit |
| 220 | receiving unit |
| 230 | control unit |
| 1001 | processor |
| 1002 | storage device |
| 1003 | auxiliary storage device |
| 1004 | communication device |
| 1005 | input device |
| 1006 | output device |

**Claims**

1. A terminal comprising:

   a control unit that calculates a delay time for an L3 measurement based on a periodicity of a reference signal and at least one of
   a number of samples used for the L3 measurement,
   a coefficient indicating an overlap between a timing of the L3 measurement and a measurement other than the L3 measurement, or
   a coefficient indicating switching of a reception beam.

2. The terminal according to claim 1, further comprising:

   a receiving unit that receives indication information indicating the L3 measurement,
   wherein, after receiving the indication information, the control unit applies a previously applied reception beam to the receiving unit until the delay time elapses, the previously applied reception beam being the reception beam applied immediately before the indication information was received by the receiving unit.

3. The terminal according to claim 1, wherein, in a case where QCL-Type D is not applicable to a relationship between the reference signal and a synchronization signal, the control unit sets the coefficient indicating switching of the reception beam of the terminal to be greater than a coefficient indicating switching of the reception beam of the terminal in a case where the QCL-Type D is applicable to the relationship between the reference signal and the synchronization signal.

4. The terminal according to claim 1, further comprising:

   a receiving unit that receives indication information indicating the L3 measurement,
   wherein, in a case where a cell indicated by the indication information differs from a visited cell, the control unit includes, in the delay time, a time for reading synchronization information of the cell designated by the indication information for synchronization.

5. A communication method executed by a terminal, the method comprising:

   calculating a delay time for an L3 measurement based a periodicity of a reference signal and at least one of a number of samples used for the L3 measurement,
   a coefficient indicating an overlap between a timing of the L3 measurement and a measurement other than the L3 measurement, or
   a coefficient indicating switching of a reception beam.

# FIG.1

SS/PBCH block
CSI-RS
PDCCH
PDSCH

PRACH
PUCCH
PUSCH

CELL

10

20

EP 4 040 837 A1

# FIG.2

| QCL Types | QCL parameters |
| :---: | :--- |
| A | Doppler shift, Doppler spread, average delay, delay spread |
| B | Doppler shift, Doppler spread |
| C | Average delay, Doppler shift |
| D | Spatial Rx parameter  (sQCL) |

EP 4 040 837 A1

# FIG.3

BASE STATION
10

USER EQUIPMENT
20

S101 RS for beam meas.

S102 Beam reporting

S103 TCI conf.

PDCCH

PDSCH

EP 4 040 837 A1

# FIG.4

EP 4 040 837 A1

# FIG.5

**CSI-RS-ResourceConfigMobility**

| | |
|---|---|
| subcarrierSpacing | ENUM{15,30,60,120 kHz} |
| csi-RS-CellList-Mobility | CSI-RS-CellMobility |
| refServCellIndex | INT(0...maxNrofServingCell-1) |

**CSI-RS-CellMobility**

| | |
|---|---|
| cellId | PhysCellId[INT(0...1007)] |
| csi-rs-MeasurementBW | csi-rs-MeasurementBW |
| density | ENUM{d1,d3} |
| csi-rs-ResourceList-Mobility | CSI-RS-ResourceMobility |

**CSI-RS-ResourceMobility**

| | |
|---|---|
| csi-RS-Index | CSI-RS-Index |
| slotConfig | CHOICE{...} |
| associatedSSB | **associatedSSB** |
| frequencyDomainAllocation | CHOICE{...} |
| firstOFDMSymbolInTimeDomain | INT(o...13) |
| sequenceGenerationConfig | INT(0...1023) |

**associatedSSB**

| | |
|---|---|
| ssb-Index | SSB-Index |
| isQuasiColocated | BOOLEAN |

# FIG.6

associated SSB —Present→ isQuasi Colocated —ON→ associatedSSB AND CSI-RS ARE PROCESSED AS QCL-typeD

isQuasi Colocated —OFF→ UNDEFINED

associated SSB —Not configured→ UNDEFINED

# FIG.7

EP 4 040 837 A1

# FIG.8

# FIG.9

# FIG.10

## INTERNATIONAL SEARCH REPORT

| International application No. |
|---|
| PCT/JP2019/039222 |

A.  CLASSIFICATION OF SUBJECT MATTER
H04W 24/10(2009.01)i
FI: H04W24/10

According to International Patent Classification (IPC) or to both national classification and IPC

B.  FIELDS SEARCHED

Minimum documentation searched (classification system followed by classification symbols)
H04W24/10

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | CATT, Work plan for RRM requirements for CSI-RS based L3 measurement, 3GPP TSG-RAN4#92 Meeting R4-1908403, 30 August 2019, whole document whole document | 1–5 |
| A | NTT DOCOMO, INC., RRM rewuirements for CSI-RS based L3 measurement, 3GPP TSG-RAN WG4 Meeting #92 R4-1908594, 30 August 2019, whole document whole document | 1–5 |
| T | NTT DOCOMO, INC., Delay requirements of CSI-RS based L3 measurement, 3GPP TSG-RAN WG4 Meeting #92-Bis R4-1911275, 04 October 2019, whole document whole document | 1–5 |

☐  Further documents are listed in the continuation of Box C.          ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 April 2020 (16.04.2020) | 28 April 2020 (28.04.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.214 V15.6.0,* June 2019